# DEMANDE DE BREVET EUROPEEN

(11) **EP 1 329 423 A1**
(43) Date de publication de la demande: **23.07.2003**
(21) Numéro de dépôt: 02080661.8
(22) Date de dépôt: 20.12.2002
(51) Int. Cl.: C02F 1/04, B01D 1/22, B01D 5/00

(54) **Procédé de traitement d'effluents chargés en graisses et unité de traitement mettant en oeuvre le procédé**

(30) Priorité: 20.12.2001 FR 0116588
(71) Demandeur: S.C.R.D. Esteve Patrick, 18000 Bourges (FR)
(72) Inventeur: Esteve, Patrick, 18230 Saint Doulchard (FR)
(74) Mandataire: Debay, Yves

(57) **Abrégé**

L'invention concerne un procédé de traitement d'effluents contenant de l'eau chargée en matières grasses, comportant un traitement thermique de séparation eau / graisses par chauffage des effluents provoquant une évaporation de l'eau, le procédé étant caractérisé par le fait que le traitement de séparation (5) est précédé par une étape (3, 4) de fluidification par chauffage de l'effluent, le traitement de séparation comportant une étape de création d'un flux réparti (59) de l'effluent fluidifié et de guidage du flux réparti vers une paroi (51) d'évaporation par chauffage, pour qu'il y ruisselle selon un flux laminaire. L'invention concerne également une unité de traitement d'effluents contenant de l'eau chargée en matières grasses, pour la mise en oeuvre de ce procédé.

## Description

La présente invention concerne les installations de traitement des eaux usées, et plus particulièrement des eaux chargées en matières grasses.

Les effluents ménagers d'une agglomération comportent un fort pourcentage de graisses, qu'il faut séparer de l'eau afin de pouvoir retransmettre de l'eau à pollution limitée vers les bassins d'une station de traitement biologique qui va régénérer la qualité de l'eau pour ensuite la déverser dans une rivière.

La séparation entre l'eau et les impuretés qu'elle comporte permet de concentrer ces dernières sous un volume réduit, et limite ainsi le besoin en capacité de stockage.

Le document DE 4 212 456 enseigne une installation d'épuration comportant en tête une cuve de décantation à mélangeur, dans laquelle les effluents gras sont homogénéisés, avec floculation éventuelle. Après une décantation de quinze à vingt heures pour éliminer les boues lourdes, l'eau grasse passe dans une cuve d'évaporation partielle de l'eau, par chauffage de la masse d'eau grasse à 60 °C. La concentration ou densité en matière grasse dans l'effluent ayant de ce fait augmenté, il faut ensuite lui faire traverser un filtre à graisse avant de pouvoir effectuer une distillation sous vide, avec condensation, pour isoler et récupérer les acides gras par distillation fractionnée. Les eaux ainsi purifiées sont conduites à une station biologique. A toutes les étapes, les boues sont retirées, désinfectées, stabilisées et stockées.

Une telle installation de l'art antérieur présente toutefois une faible efficacité horaire lors du traitement thermique dans la cuve de séparation, si bien que ce traitement doit s'étendre sur une grande période. Il faut donc disposer de cuves de grand volume, ce qui nécessite une installation de coût et de volumes relativement importants.

La présente invention vise à proposer une solution pour éviter les inconvénients évoqués ci-dessus.

A cet effet, l'invention concerne tout d'abord un procédé de traitement d'effluents contenant de l'eau chargée en matières grasses, comportant un traitement thermique de séparation eau / graisses par chauffage des effluents provoquant une évaporation de l'eau, procédé caractérisé par le fait que le traitement de séparation est précédé par une étape de fluidification par chauffage de l'effluent, le traitement de séparation comportant une étape de création d'un flux réparti de l'effluent fluidifié et de guidage du flux réparti vers une paroi d'évaporation par chauffage, pour qu'il y ruisselle selon un flux laminaire.

Ainsi, l'effluent étant fluidifié en tête des étapes de traitement, il peut alors être traité, non plus statiquement en masse, mais de façon dynamique avec un ruissellement en flux laminaire sur la paroi chauffée d'évaporation, ce qui assure un bon contact avec celle-ci et donc une efficacité optimale de séparation eau / graisses.

De préférence, l'étape de fluidification s'accompagne d'une étape d'homogénéisation de l'effluent et de préférence aussi d'une étape de filtrage des graisses.

Ces étapes contribuent à fluidiser globalement l'effluent et à éviter des dépôts parasites lors de l'opération de séparation par ruissellement.

Avantageusement, la fluidification est effectuée par chauffage à au moins 70°C et est précédée par une étape homologue avec préchauffage entre environ 50 et environ 70°C.

Dans un mode particulier de mise en oeuvre du procédé, la création du flux réparti s'effectue par mise en circulation dans une gouttière de déversement sur la paroi d'évaporation.

Dans un autre mode, le guidage de l'effluent s'effectue par diffusion d'un flux global de jets élémentaires multiples de l'effluent vers la paroi d'évaporation.

De préférence, la fluidification est effectuée directement après une étape de décantation de l'effluent provenant directement d'émissaires d'alimentation en effluents.

Pour faciliter son écoulement et sa fluidification, l'effluent peut être soumis à une pression de 1 à environ 2 bars préalablement au traitement de séparation, qui est avantageusement effectué sous une pression de 0,3 à 0,7 bar.

L'invention concerne aussi une unité de traitement d'effluents contenant de l'eau chargée en matières grasses, pour la mise en oeuvre du procédé de l'invention, comportant des moyens de séparation de phases eau / graisses par chauffage des effluents provoquant une évaporation de l'eau, unité caractérisée par le fait qu'elle comporte des moyens de fluidification par chauffage de l'effluent, disposés en amont de moyens de séparation de phases eau / graisses comportant des moyens agencés pour engendrer un flux réparti de l'effluent et pour le diriger vers une paroi d'évaporation par chauffage.

De préférence, l'unité de traitement comporte des moyens intégrés de filtrage des graisses et de fluidification de l'effluent par chauffage à au moins 70°C, avec avantageusement des moyens de préfiltrage et de préchauffage entre environ 50 et environ 70°C.

Les moyens de séparation de phases comporter une gouttière de déversement d'une nappe d'effluent sur la paroi d'évaporation ou bien un diffuseur d'un flux de gouttelettes d'effluent vers la paroi d'évaporation.

De préférence, les moyens de fluidification sont prévus pour traiter directement les effluents, éventuellement décantés, provenant d'émissaires.

Les moyens de fluidification peuvent être prévus pour soumettre les effluents à une pression de 1 à environ 2 bars, les moyens de séparation étant par exemple prévus pour fonctionner sous une dépression de 0,3 à 0,7 bar.

Pour un filtrage efficace, les moyens intégrés de filtrage et de fluidification comportent avantageusement une série de tamis à tailles de maille décroissantes vers l'aval.

Afin d'éviter la nécessité d'une station complémentaire de traitement d'épuration mécanique, il est avantageux de prévoir des moyens aval de réception et de refroidissement de l'eau traitée à une température compatible avec un traitement biologique, prévus pour la transférer à une station de traitement biologique.

L'eau de qualité ainsi régénérée peut alors être rejetée en rivière.

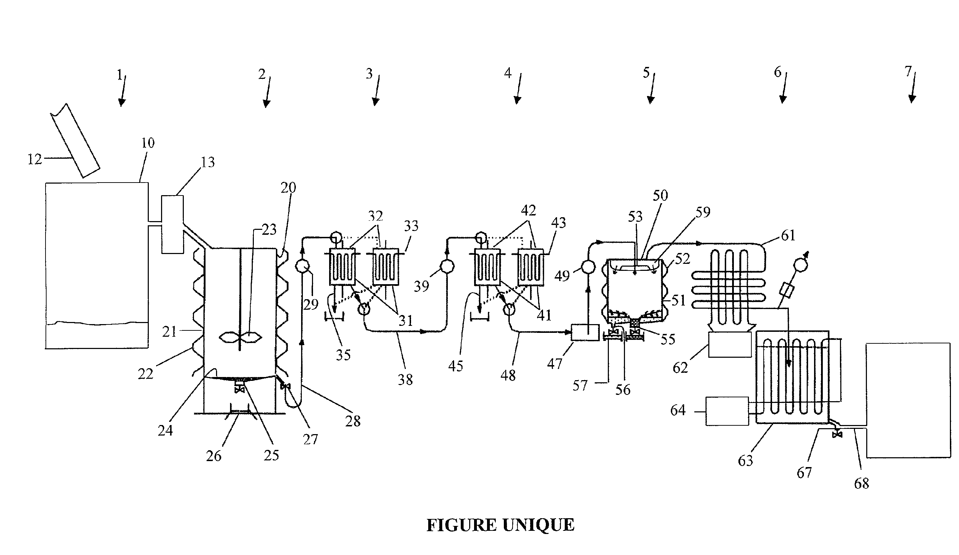

L'invention sera mieux comprise à l'aide de la description suivante d'une forme de réalisation d'une unité de traitement d'effluents pour la mise en oeuvre du procédé de l'invention, en référence à la figure unique annexée.

La figure unique représente schématiquement une unité ou installation de traitement d'effluents contenant de l'eau polluée chargée en graisses. L'unité représentée comporte, reliés en série d'amont en aval, un ensemble 1 à cuve ou bac de décantation, un ensemble à cuve d'homogénéisation 2, un ensemble 3 de préfiltrage des graisses, un ensemble 4 de filtrage complémentaire des graisses et un ensemble 5 évaporateur d'eau associé à un ensemble condenseur 6. La référence 7 désigne une station aval, éventuellement distante, de traitement biologique des eaux purifiées.

L'ensemble 1 à cuve de décantation 11 reçoit les effluents provenant d'émissaires 12 de collecte des eaux usées d'une agglomération urbaine, pour retenir les sédiments lourds.

Une cuve d'homogénéisation 20 de l'ensemble 2 reçoit l'effluent issu de la cuve de décantation 1 à travers un dispositif de préchauffage 13. L'effluent contient en général de 50 à 80 % en masse de graisse. La cuve d'homogénéisation 20 comporte une paroi 21 chauffée par des éléments chauffants 22, tels que résistances électriques ou serpentins parcourus par de l'eau chaude. Un agitateur 23 homogénéise mécaniquement l'effluent, fluidifié par le chauffage à relativement haute température, au moins 50°C, précisément ici 60 à environ 70°C dans cet exemple. Un bouchon de fond de cuve 25, accessible par une trappe basse 26 d'un bâti portant la cuve 20, permet d'accéder, lors d'entretiens périodiques, à un volume de fond de cuve surmonté d'un tamis 24, afin d'évacuer les sédiments. Une canalisation ou conduite 28 à pompe 29, commandée par un robinet d'arrêt 27, alimente l'ensemble de préfiltrage 3.

L'ensemble de préfiltrage 3 comporte ici plusieurs filtres, précisément deux filtres 31 montés en parallèle. Chaque filtre 31 comporte un caisson étanche 32 traversé par un flux partiel de l'effluent issu de la conduite 28 et comportant un circuit de chauffage 33. Une conduite dérivée 35 en fond de caisson permet l'évacuation des déchets qui se déposent. Une canalisation ou conduite de sortie aval 38, à pompe 39, alimente en affluent l'ensemble de filtrage 4. L'efficacité du filtrage est ici accrue par différence de pression amont / aval, ici par mise sous pression en amont à 1 à 2 bars environ. En variante ou en complément, il est engendré une dépression en aval des filtres 31.

L'ensemble de filtrage 4 a ici une structure identique à celle de l'ensemble 3, avec des éléments 41, 42, 43, 45, 48, 49 respectivement homologues des éléments 31, 32, 33, 35, 38 et 39. La répétition de la description ci-dessus sera donc omise. La référence 47 sur la conduite 48 désigne un réservoir tampon de filtrage. Le circuit de chauffage 43 assure le maintien de la température de l'effluent au-dessus d'un seuil minimal de température, correspondant à un seuil minimal de fluidité de l'effluent. Le seuil minimal de température est d'environ 70°C, mais l'effluent est ici surchauffé entre 85 et 95°C. Le circuit de chauffage 33 assure ici un préchauffage à au moins environ 50°C, précisément ici environ 70°C. Les divers filtres 31 et 41 comportent une série de tamis à tailles de maille décroissantes vers l'aval.

L'ensemble évaporateur 5 comporte une cuve d'évaporation / distillation 50 à paroi d'évaporation 51 sensiblement verticale et munie d'éléments de chauffage 52. L'évaporation est ici effectuée sous pression réduite, entre 0,3 et 0,7 bar, précisément ici 0,5 bar. Dans cet exemple, la canalisation 48 déverse l'effluent dans une gouttière horizontale 53 à fond plat ou légèrement arrondi disposée en partie haute de la paroi 51, de façon à ce que l'effluent sorte de la gouttière 53 sous la forme d'une nappe 59, par l'une ou les deux extrémités ouvertes de celle-ci. En d'autres termes, la canalisation 48, de diamètre réduit, se poursuit par la gouttière de conduite 53 de section accrue et à fond sensiblement plat ou à rayon de courbure plus élevé, ce qui transforme le flux circulaire de la canalisation 48 en un flux sensiblement laminaire, pour une évaporation en couche mince. Celui-ci se déverse ainsi en une ou deux nappes 59 sur la paroi d'évaporation 51 et, ainsi réparti, il ruisselle sur la quasi totalité de celle-ci.

En variante, le flux déborde par l'un des bords de la gouttière 53, situé à un niveau inférieur à celui de l'autre bord.

Encore en variante, le guidage de l'effluent s'effectue par diffusion d'un flux global de jets élémentaires multiples de l'effluent vers la paroi d'évaporation 51, au moyen d'un diffuseur du genre d'une pomme de douche.

Ainsi, dans tous les cas, le flux, sous forme de nappe ou de gouttelettes, présente une section transversale d'épaisseur très réduite.

Un bouchon 55, d'accès tout au fond de la cuve 50, permet de retirer périodiquement les sédiments, qui sont ensuite conduits à une décharge. Les graisses liquides sont évacuées vers un plateau d'évacuation 57 à travers une canalisation 56 en partie basse de la cuve 50.

L'évaporation par ruissellement en couche mince à ici 90°C assure un bon contact effluent / paroi chauffée 51, et donc une bonne efficacité d'évaporation. Cela permet d'effectuer une élimination directe de l'eau, ou séparation eau / graisses, en une seule étape, sans nécessité d'étapes de prétraitement à cet effet. Les deux étapes amont de filtrage de graisse ici prévues ont pour but de diminuer la fréquence des opérations de nettoyage de la cuve 50. L'homogénéisation initiale de l'effluent a le même but, en vue d'éviter les dépôts parasites. En outre, l'élimination des déchets divers et des graisses en amont de la cuve d'évaporation 50 contribue à la fluidification de l'effluent.

Le ruissellement en couche mince est assuré par le fait que l'effluent se présente sous une forme suffisamment fluide, grâce au chauffage préalable à au moins 70°C, et ici même 90°C, ce qui permet de le diriger vers la paroi d'évaporation 51 sous la forme d'un flux réparti en largeur, c'est-à-dire globalement horizontalement, pour atteindre une large zone de la périphérie haute de la paroi d'évaporation 51 et ainsi former un rideau couvrant par ruissellement la quasi-totalité de la paroi 51.

Les vapeurs d'eau ainsi émises traversent un serpentin 61 de l'ensemble condenseur 6, refroidi par un circuit de refroidissement 62, pour se déverser dans un bac de refroidissement 63 équipé d'un circuit de refroidissement 64. L'eau liquide ainsi recueillie, et refroidie à une température quasi-ambiante compatible avec une dégradation bactérienne, ici 30°C, est conduite directement à la station 7 de traitement biologique des eaux, à travers une conduite 68 contrôlée par un robinet d'arrêt 67. La nécessité d'un passage à travers une station de retraitement est ainsi évitée.

Les calories de la vapeur d'eau peuvent être récupérées pour les besoins énergétiques de l'installation.

Les graisses récupérées peuvent être brûlées dans une centrale thermique ou une installation industrielle telle qu'une cimenterie, ou être recyclées.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de traitement d'effluents contenant de l'eau chargée en matières grasses, comportant un traitement thermique de séparation eau / graisses par chauffage des effluents provoquant une évaporation de l'eau, procédé **caractérisé par le fait que** le traitement de séparation (5) est précédé par une étape (3, 4) de fluidification par chauffage de l'effluent, le traitement de séparation comportant une étape de création d'un flux réparti (59) de l'effluent fluidifié et de guidage du flux réparti vers une paroi (51) d'évaporation par chauffage, pour qu'il y ruisselle selon un flux laminaire.

2. Procédé selon la revendication 1, dans lequel l'étape de fluidification s'accompagne d'une étape d'homogénéisation (2) de l'effluent.

3. Procédé selon l'une des revendications 1 et 2, dans lequel la fluidification s'accompagne d'une étape (3, 4) de filtrage des graisses.

4. Procédé selon l'une des revendications 1 à 3, dans lequel la fluidification est effectuée par chauffage à au moins 70°C.

5. Procédé selon les revendications 3 et 4 ensemble, dans lequel la fluidification par filtrage avec chauffage à au moins 70°C est précédée par une étape homologue avec préchauffage entre environ 50 et environ 70°C.

6. Procédé selon l'une des revendications 1 à 5, dans lequel la création du flux réparti s'effectue par mise en circulation dans une gouttière (53) de déversement sur la paroi d'évaporation (51).

7. Procédé selon l'une des revendications 1 à 5, dans lequel le guidage de l'effluent s'effectue par diffusion d'un flux global de jets élémentaires multiples de l'effluent vers la paroi d'évaporation (51).

8. Procédé selon l'une des revendications 1 à 7, dans lequel la fluidification est effectuée directement après une étape de décantation de l'effluent provenant directement d'émissaires (12) d'alimentation en effluents.

9. Procédé selon l'une des revendications 1 à 8, dans lequel l'effluent est soumis à une pression de 1 à environ 2 bars préalablement au traitement de séparation.

10. Procédé selon l'une des revendications 1 à 9, dans lequel le traitement de séparation (5) est effectué sous une pression de 0,3 à 0,7 bar.

11. Unité de traitement d'effluents contenant de l'eau chargée en matières grasses, pour la mise en oeuvre du procédé de l'une des revendications 1 à 10, comportant des moyens (5) de séparation de phases eau / graisses par chauffage des effluents provoquant une évaporation de l'eau, unité **caractérisée par le fait qu'**elle comporte des moyens (3, 4) de fluidification par chauffage de l'effluent, disposés en amont de moyens de séparation de phases eau / graisses (5) comportant des moyens (53) agencés pour engendrer un flux réparti de l'effluent et pour le diriger vers une paroi d'évaporation par chauffage (51).

12. Unité selon la revendication 11, comportant des moyens intégrés (3, 4) de filtrage des graisses et de fluidification de l'effluent par chauffage à au moins 70°C.

13. Unité selon la revendication 12, comportant des moyens intégrés (3) de préfiltrage et de préchauffage entre environ 50 et environ 70°C.

14. Unité selon l'une des revendications 11 à 13, dans laquelle les moyens de séparation de phases (5) comportent une gouttière (53) de déversement d'une nappe d'effluent sur la paroi d'évaporation (51).

15. Unité selon l'une des revendications 11 à 13, dans laquelle les moyens de séparation de phases comportent un diffuseur d'un flux de gouttelettes d'effluent vers la paroi d'évaporation (51).

16. Unité selon l'une des revendications 11 à 15, dans laquelle les moyens de fluidification (3, 4) sont prévus pour traiter directement les effluents, éventuellement décantés, provenant d'émissaires (12).

17. Unité selon l'une des revendications 11 à 16, dans laquelle les moyens de fluidification (3, 4) sont prévus pour soumettre les effluents à une pression de 1 à environ 2 bars.

18. Unité selon l'une des revendications 11 à 17, dans laquelle les moyens de séparation (5) sont prévus pour fonctionner sous une dépression de 0,3 à 0,7 bar.

19. Unité selon l'une des revendications 12 à 18, dans laquelle les moyens intégrés de filtrage et de fluidification (3, 4) comportent une série de tamis à tailles de maille décroissantes vers l'aval.

20. Unité selon l'une des revendications 11 à 19, comportant des moyens aval (63) de réception et de refroidissement de l'eau traitée à une température compatible avec un traitement biologique, prévus pour la transférer à une station de traitement biologique (7).
